Europäisches Patentamt

European Patent Office

Office européen des brevets

(19)

(11) Veröffentlichungsnummer: **0 493 724 A1**

# (12) EUROPÄISCHE PATENTANMELDUNG

(21) Anmeldenummer: **91121342.9**

(22) Anmeldetag: **11.12.91**

(51) Int. Cl.⁵: **D21B 1/32**, D21B 1/02

(30) Priorität: **29.12.90 DE 4042226**

(43) Veröffentlichungstag der Anmeldung:
**08.07.92 Patentblatt 92/28**

(84) Benannte Vertragsstaaten:
**AT BE CH DE DK ES FR GB IT LI LU NL SE**

(71) Anmelder: **PWA INDUSTRIEPAPIER GmbH
Postfach
W-8201 Raubling(DE)**

(72) Erfinder: **Menges, Wilhelm
St. Margarethenweg 20
W-8024 Brannenburg(DE)**

(74) Vertreter: **Dr. Fuchs, Dr. Luderschmidt
Dipl.-Phys. Seids, Dr. Mehler Patentanwälte
Abraham-Lincoln-Strasse 7, Postfach 4660
W-6200 Wiesbaden(DE)**

(54) **Verfahren zum Aufbereiten von Altpapier.**

(57) Es wird ein neuartiges Verfahren zur Aufbereitung von unsortiertem Altpapier beschrieben, welches anstelle eines herkömmlichen Pölpers als Auflöser im wesentlichen zwei Zerkleinerungsschritte verwendet, wobei das Altpapier nach vorangegangener Schwerschmutzabscheidung und Befeuchtung im ersten Zerkleinerungsschritt zu Flächenteilen von etwa 5 cm Durchmesser vergleichmäßigt und somit in eine in Suspension förderbare Masse überführt wird. In einem zweiten Zerkleinerungsschritt wird das Altpapie auf Teilchengrößen von etwa 8-12 mm Durchmesser gebracht und gleichzeitig weitgehend disintegriert. In einer ersten Trennstufe wird der Großteil des Faserstoffanteiles als Kurzfaserfraktion abgetrennt, während der Rest nachdisintegriert und dann in eine Langfaserkomponente und eine im wesentlichen kunststoffenthaltende Reststoffkomponente aufgeteilt wird, aus der Thermoplastmaterial zurückgewinnbar ist.

EP 0 493 724 A1

Die Erfindung betrifft ein Verfahren zum Aufbereiten von Altpapier, bei dem das Altpapier in Wasser suspendiert und unter Einwirkung von Agitationsmitteln weitgehend zerfasert wird.

Altpapier wird in zunehmendem Maße wieder der Papierherstellung zugeführt. Das Problem der Altpapieraufbereitung liegt darin, papierfremde Bestandteile und Verunreinigungen aus dem Rohstoff zu entfernen. Seit Jahrzehnten verarbeitet die deutsche Papierindustrie einen hohen Anteil an sogenanntem sortierten Altpapier, welches weitgehend aus Abfällen aus der papierverarbeitenden Industrie kommt und in Ballen gepreßt zum Wiedereinsatz als Rohstoff für die Papiererzeugung gelangt. Solches Altpapier enthält zwar auch einen gewissen Anteil an Verunreinigungen, ist in der Aufbereitung aber nicht sehr problematisch. Es besteht jedoch zunehmend die Notwendigkeit, auch mindere Altpapiersorten bis zum gesammelten Haushaltsabfall hin mit zu verwenden. Derartiges Altpapier setzt man vorzugsweise für die Erzeugung von Verpackungspapieren, insbesondere für die Erzeugung von denjenigen Papieren ein, aus denen Wellpappe hergestellt wird.

Für die Aufbereitung herkömmlichen Altpapieres, welches wenig oder gar keinen Haushaltsabfall enthält, hat sich eine Art von Aufbereitungsanlage durchgesetzt, die etwa wie folgt aussehen kann: das Altpapier wird unter Wasserzugabe in einem Auflöseaggregat, einem sogenannten Pulper, der speziell für die Verarbeitung von Altpapier ausgerüstet ist, unter Einwirkung starker Agitation aufgelöst bzw. zerfasert. Schwerschmutz wie Steine, Metallteile und dergleichen sinken in einen eigens dafür vorgesehenen Auffangraum am Boden des Pulpers und werden von dort von Zeit zu Zeit ausgeschleust. Fremdbestandteile wie Gewebestücke, großflächige Folienstücke, Seile, Schnüre und dergleichen verspinnen sich durch die Agitation im Pulper zu einem sogenannten Zopf, der langsam aus dem Pulper abgezogen wird und sich jeweils durch Anlagerung von neuen, zopfbildenden Fremdbestandteilen verlängert. Ein großer Anteil von bei der Altpapierauflösung anfallenden und auszuscheidenden Fremdstoffen, die sich nicht unmittelbar in einzelne Fasern für die Wiederverwendung in der Papiererzeugung einsetzen lassen, besteht aus sogenanntem Leichtschmutz. Hierzu gehören unter anderem Kunststoffteilchen, aber auch Stücke nicht auflösbaren Papiers, welches ein- oder zweiseitig mit Kunststoffen beschichtet ist. Durch ein gewisses Strömungsbild im Pulper sammelt sich dieser Leichtschmutz bevorzugt an einer bestimmten Stelle, beispielsweise in der Nähe der Pulperwand, von wo aus er kontinuierlich in gewissem Anteil abgezogen werden kann.

Die aus dem Pulper über eine Siebplatte abgezogene Faserstoffsuspension wird im allgemeinen noch über ein oder mehrere Sortierstufen geführt, in denen weiterer, meist in kleinerer Form anfallender Leichtschmutz abgetrennt wird. In einer typischen Anlage wird die Faserstoffsuspension dann weiter mittels eines Sortierers in eine Langfaserkomponente und eine Kurzfaserkomponente aufgeteilt. Die Langfaserkomponente wird beispielsweise mittels eines Banddruckfilters zu einer hohen Stoffdichte eingedickt, um vor Verwendung auf der Papiermaschine in einem Hochkonsistenzzerfaserer noch weiter zerfasert zu werden. Nach anschließender Mahlung in einem Refiner bei wieder reduzierter Stoffdichte wird diese Langfaserkomponente dann im allgemeinen zur Herstellung von Testliner, d.h. demjenigen Papier mitverwendet, welches die Decklage einer Wellpappe bildet und eine hohe Festigkeit aufweisen soll. Die Kurzfaserkomponente wird zur Herstellung der Mittellage für Wellpappe verwendet, nämlich demjenigen Papier, welches später die Welle in der Wellpappe bildet und als Wellpappenrohpapier bezeichnet wird.

Der aus der Altpapieraufbereitung gesammelte ausgeschiedene Leichtschmutz wird eventuell noch einem Wasch- oder Sortiervorgang unterzogen, um ihn vom mitgeführten Faserstoff zu befreien, er wird dann aber nach Entwässerung zusammen mit dem im Pulper ausgeschiedenen Schwerschmutz einem Container für die Ablagerung auf einer Deponie zugeführt. Bei Verarbeitung von sortiertem Altpapier hält sich die Menge des zu entsorgenden Schwer- und Leichtschmutzes in Grenzen, so daß hierdurch keine besonderen Deponieprobleme entstehen.

Es hat sich jedoch gezeigt, daß bei zunehmender Mitverarbeitung von Sammelaltpapier in einer Anlage des vorstehend beschriebenen Typs der Anteil an Fremdstoffen erheblich ansteigt. Dies liegt daran, daß das Sammelaltpapier in erhöhtem Maße auch Verpackungsmaterialien aus Kunststoff, insbesondere aber auch kunststoffbeschichtete Papiere enthält, die mit einer herkömmlichen Altpapieraufbereitungsanlag nicht aufschließbar sind und daher als Leichtschmutz anfallen. Eine Analyse des Leichtschmutzes bei höherem Einsatz von Sammelaltpapier hat ergeben, daß dieser Leichtschmutz tatsächlich zu einem hohen Anteil Stoffe enthält, die ihrer Natur nach wieder verwendbar wären.

Der herkömmliche Pulper als Altpapierauflöser ist für eine möglichst weitgehende Disintegration schwerer löslicher Bestandteile aus unsortiertem Sammelaltpapier nicht geeignet. Es fällt zu viel Abfall an, der einerseits Entsorgungsschwierigkeiten bereitet, andererseits aber auch noch einen erheblichen Anteil an wiederverwertbaren Rohstoffen enthält.

Der Erfindung liegt daher die Aufgabe zugrunde, ein Verfahren aufzuzeigen, mit dem es möglich ist, ein Rohmaterial, welches aus Altpapier mit einem Anteil an schwer oder nicht disintegrierbaren Bestandteilen besteht, wieder im Produktionsprozess einzusetzen und dabei möglichst auch die nicht disintegrierbaren Bestandteile zu hohem Anteil in wieder verwendbare Roh- oder Halbstoffe aufzuarbeiten.

Diese Aufgabe wird erfindungsgemäß dadurch gelöst, daß der Rohstoff in einem Vorzerkleinerungsaggregat zu gewissermaßen vergleichmäßigten Flächenabschnitten zerkleinert wird, die in wässriger Suspension förderbar sind, sich dann eine weitere Zerkleinerung dieser Flächenabschnitte in wässriger Suspension in kleine Flächenstücke von vorzugsweise etwa 2 bis 15 mm maximalem Durchmesser, insbesondere von 6 bis 12 mm maximalem Durchmesser anschließt, die Suspension aus diesen kleinen Flächenstücken weitgehend zerfasert und schließlich in einer Sortierstufe in eine im wesentlichen aus Faserstoffen bestehende Fraktion und eine Fraktion, die im wesentlichen die nicht oder schwer disintegrierbaren Reststoffe enthält, aufgeteilt wird.

Wenn im Rahmen dieser Beschreibung im Zusammenhang mit der Aufbereitung des Altpapieres und des Leichtschmutzes von Zerfaserung oder Disintegration gesprochen wird, so ist damit lediglich die Zerfaserung desjenigen Anteiles des Rohstoffes gemeint, der aus Papierfaserstoff besteht. Die im Rohstoff enthaltenen Kunststoff-Folienteile beispielsweise werden dabei nicht zerfasert sondern höchstens zerkleinert, oder, was wünschenswert ist, vom eventuellen Faserstoffsubstrat abgelöst. Für die Angabe der Suspensionskonzentrationen wird im folgenden die in der Papierindustrie übliche Angabe "% atro" verwendet, welche sich auf Prozent absolut trocken gedachten Feststoffes in der Suspension bezieht.

Die Ausgestaltung des Vorzerkleinerungsschrittes hängt davon ab, in welcher Form das Altpapier in den erfindungsgemäßen Verfahrensablauf übernommen wird. Die Zerkleinerung sollte zumindest in Flächenstücke von etwa 3 bis 10 cm größtem Durchmesser, vorzugsweise in Flächenstücke von etwa 4 bis 6 cm größtem Durchmesser erfolgen. Vorzugsweise erfolgt auch schon die Vorzerkleinerung unter Wasserzugabe und das Rohmaterial sollte zu solchen Flächenstücken zerkleinert werden, die eine Förderung des Rohstoffes in wässriger Suspension zu weiteren Verfahrensaggregaten möglich macht. Das Vorzerkleinerungsaggregat kann eine schneidende und/oder zerreißende Funktion ausüben, wobei das Rohmaterial lediglich in die gewünschten Flächenstücke zerteilt wird. Zweckmäßig kann es aber sein, Zerkleinerungswerkzeuge zu wählen, die derart robust ausgestaltet sind, daß sie in der Lage sind, auch im Rohmaterial enthaltene nicht papierartige Fremdkörper mit zu zerkleinern.

Insbesondere bei Auflösung von stark schmutzbehaftetem Altpapier ist es vorteilhaft, den vorzerkleinerten Zustand in wässriger Suspension für einen Waschvorgang auszunutzen, bei dem beispielsweise Reste von einst verpackten Lebensmitteln und Getränken vom Rohstoff abgelöst werden. Der erste Zerkleinerungsschritt sollte daher derart sein, daß sich Einzelstücke des Rohmaterials in einer Größe ergeben, in der sie ungehindert allseitig von der Waschflüssigkeit umspült werden können. Die kontaminierte Waschflüssigkeit wird unter anderem als Entwässerungsfiltrat des disintegrierten Stoffes gebotenerweise aus dem Prozeß abgezogen und unmittelbar einer biologischen Klärbehandlung unterworfen.

Das eventuell gewaschene und vorzerkleinerte Rohmaterial wird dann in wässriger Suspension einer weiteren Zerkleinerung auf Flächenstücke mit größtem Durchmesser von etwa 2 bis 15 mm, vorzugsweise von 6 bis 12 mm unterworfen. Es ist vorteilhaft, zwischen den beiden Zerkleinerungsstufen eine Schwerschmutzabscheidung vorzusehen, in der in der ersten Zerkleinerungsstufe mitzerkleinerter Schwerschmutz zweckmäßigerweise periodisch ausgeschleust werden kann. Die weitere Zerkleinerung in kleine Flächenstücke und die Zerfaserung dieser Flächenstücke wird vorzugsweise zeitlich in ein und demselben Verfahrensgang vorgenommen. Hierfür ist beispielsweise eine Vorrichtung mit einem im wesentlichen zylindrischen Gehäuse geeignet, dessen Zylinderachse horizontal verläuft, und welches an einer Seite seines Mantels eine Beschickungsöffnung und an einer anderen Seite einen Siebbereich zum Abziehen der zerkleinerten und zerfaserten Suspension aufweist. Eine solche Vorrichtung verfügt ferner über einen um die Zylinderachse rotierenden Werkzeugträger, der entlang Zylindermantellinien mit Werkzeugen besetzt ist, welche mit Gegenwerkzeugen an der Innenseite des Gehäuseumfanges zusammenarbeiten. Diese Werkzeuge können teilweise schneidender und teilweise disintegrierender Art sein.

Die Zerkleinerung des Rohstoffes zu kleinen Flächenstücken der angegebenen Größe führt dazu, daß bei Gegenwart von folienbeschichteten Verpackungspapieren und Kartons, die einen nicht unerheblichen Anteil des Altpapieres ausmachen, die Folienstückchen vom Faserstoffsubstrat abgelöst werden, so daß sich diese beiden Materialkomponenten später trennen lassen.

Für die zweite Zerkleinerung des Rohstoffes in die kleinen Flächenteilchen und eine gleichzeitige Zerfaserung haben sich in Versuchen Werkzeuge als geeignet erwiesen, wie sie beispielsweise im Waschgranulator CS 500/1000 IIIA der Firma Condux in Hanau realisiert sind.

Für die weitere Bearbeitung der disintegrierten Rohmaterialsuspension kann es vorteilhaft sein, diese Suspension vor ihrer Trennung in eine Faserstoff-Fraktion und eine die Reststoffe enthaltende Fraktion in einer Rührbütte zwischenzulagern, um durch die Agitationseinwirkung des Rührwerkes die mögliche Zerfaserung noch zu vervollständigen.

Als wiederzugewinnende Komponente des nicht faserigen Reststoffes sind im wesentlichen die Thermoplaste vorgesehen, aus denen er zu hohem Anteil besteht und die von folienbeschichteten Verpackungsmaterialien stammen. Der Reststoff enthält zu geringerem Anteil im allgemeinen aber auch noch andere Kunststoffe meist mit höherem spezifischen Gewicht wie PVC und dergleichen. Diese schwereren Kunststoffe werden vorzugsweise in einer ein- oder zweistufigen Zykloneinrichtung aus der Reststoffsuspension ausgeschieden. Der Akzeptstoff aus dieser Zyklonsortiereinrichtung wird zweckmäßigerweise auf einem Schüttelsieb grobentwässert, um dann beispielsweise in einer Zentrifuge vorentwässert zu werden. Das hierbei anfallende Filtrat kann zur Suspensionsverdünnung in einer vorangegangenen Stufe wiederverwendet werden. Nach der Zentrifugenentwässerung wird der Reststoff dann getrocknet und kann in einem Silo zwischengelagert werden. Im Grunde genommen ist der fast ausschließlich aus Thermoplasten bestehende Reststoff in dieser Form bereits handhabungs- bzw. abfüllfähig, um ihn als Rohstoff einer weiteren Verarbeitung zuzuführen. Zweckmäßigerweise findet jedoch im Anschluß an die Trocknung des Reststoffes eine Granulierung statt. Diese kann beispielsweise in einer an sich bekannten Plast-Agglomerator-Anlage vom Typ "Original-Pallmann", Typ PFV 250/60 vorgenommen werden.

Es hat sich in Versuchen gezeigt, daß das so erhaltene Thermoplastgranulat in Kunststoffextrudern zur Herstellung verschiedenster Gegenstände verarbeitet werden kann. Der noch im Granulat enthaltene Faserstoffanteil von etwa 5 % hat sogar einen positiven Einfluß auf verschiedene Festigkeitseigenschaften des Kunststoffes, die erhalten werden, solange die Kunststoffverarbeitung nicht bei Temperaturen erfolgt, bei denen sich der Faserstoff zersetzt.

Wie in der bekannten Altpapieraufbereitung üblich, ist es auch hier zweckmäßig, den Faserstoffanteil in zwei qualitätsmäßig unterschiedliche Fraktionen aufzuteilen und somit in der ersten Trennstufe einen Großteil der Faserstoffe aus der Rohstoffsuspension abzutrennen, um ihn einer eigenen Faserstoffaufbereitungslinie zuzuführen, und die den wesentlichen Anteil der Reststoffe enthaltende Fraktion nach einer ergänzenden Disintegration einem weiteren Trennschritt zu unterwerfen, in welchem dieser Rest in eine zweite Faserstoff-Fraktion und in eine im wesentlichen aus den Reststoffen bestehende Fraktion aufgeteilt wird.

Als Aggregat für die erste Trennstufe hat sich ein Sieb-Contaminex der Firma Voith in Heidenheim als geeignet erwiesen, wenn in diesem Gerät ein Lochsieb von etwa 3 mm Lochung verwendet wird. Der Contaminex verfügt über eine Schwerschmutzsammeleinrichtung, so daß der sich absetzende Schwerschmutz bei dieser ersten Suspensionstrennung gleichzeitig mit ausgeschleust werden kann.

Für die Nachdisintegration kann beispielsweise ein Voith-Turbowasher mit einer Sieblochung von 2,6 mm Durchmesser eingesetzt werden. Dieses Gerät bewirkt eine gewisse Nachzerfaserung, es kann mit ihm aber auch gleichzeitig die zweite Trennung in die zweite Faserstoff-Fraktion und die im wesentlichen aus den Reststoffen bestehende Fraktion vorgenommen werden.

Diese sich aus der zweiten Trennstufe ergebende zweite Faserstoff-Fraktion ist im allgemeinen langfaseriger als die erste Fraktion und wird daher sinnvollerweise getrennt aufbereitet. Nach einer Sortierstufe zum Ausscheiden restlicher Verunreinigungen, die in die Reststoff-Fraktion zurückgeführt werden können, wird der Stoff vorzugsweise eingedickt und einer Refinermahlung unterworfen, um dann der Papierfabrikation zugeführt zu werden. Die erste Faserstoff-Fraktion umfaßt den größeren Teil des Faserstoffes aus dem Altpapier. Auch sie wird zweckmäßigerweise in einer Sortierstufe von verbliebenen Verunreinigungen befreit, die der Reststoff-Fraktion zugeführt werden. Da die erste Faserstoff-Fraktion im wesentlichen auch noch Druckfarbenbestandteile enthält, wird sie auf herkömmliche Weise einer Waschflotation unterworfen, bevor sie eingedickt und der Papierfabrikation für einen unterschiedlichen Einsatzzweck zur Verfügung gestellt wird.

Im folgenden wird die Erfindung anhand des beiliegenden Verfahrensschemas noch näher erläutert.

Auf ein erstes Förderband 2 wird unsortiertes loses Altpapier 4 aufgegeben, welches beispielsweise eine Haushaltssammelware sein kann. An das erste Förderband 2 schließt sich ein zweites Förderband 6 an, welches mit höherer Geschwindigkeit als das Förderband 2 läuft, um das aufgegebene Altpapier möglichst in einen kontinuierlichen Strom zu verdünnen bzw. zu vereinzeln. Dieser verdünnte Altpapierstrom gelangt dann auf ein Schüttelsieb 8, auf dem Schwerschmutz, wie Steine, Metallteile und dergl. aus dem Altpapier abgesiebt werden soll, der sich unterhalb des Siebes in einem Trichter sammelt und von Zeit zu Zeit in einen Deponiebehälter 10 gegeben wird. Mittels eines steigenden Förderbandes 12 gelangt das vom Schwerschmutz befreite Altpapier in den Aufgabetrichter 14 einer Aufarbeitungsvorrichtung 16.

Kleinere Altpapierbestandteile, die das Schwerschmutzsieb in den darunter angeordneten Auffangtrog passieren, können mittels Blasluft aus diesem Auffangtrog über eine (nicht dargestellte) Leitung in den Aufgabetrichter 14 geblasen werden. Die Vorrichtung 14 dient der Durchführung der wesentlichen Schritte des hier beschriebenen Verfahrens.

In dem Zuführschacht der Vorrichtung 16, der sich an den Aufgabetrichter 14 anschließt, ist ein erstes Zerkleinerungsaggregat 18 angeordnet. Das Zerkleinerungsaggregat 18 ist mit schneidenden bzw. zerreißenden Werkzeugen bestückt und dient der Vorzerkleinerung des Altpapiers zu möglichst vergleichmäßigten Stücken in einer Größenordnung von etwa 5 cm Durchmesser. Auf seinem Wege in das erste Zerkleinerungsaggregat 18 wird das Altpapier mit Wasser befeuchtet, welches über einen Wasseranschluß 20 am Zuführtrichter der Vorrichtung 16 zugegeben wird.

Aus dem ersten Zerkleinerungsaggregat 18 gelangt das vergleichmäßigte Altpapier in einen Umwälztrog 22 der Vorrichtung 16, welcher mit einem Rührwerk 24 versehen ist. Die Füllhöhe im Umwälztrog 22 der Vorrichtung 16 wird durch ein Überlaufwehr vor dem Austrittsschacht 26 der Vorrichtung geregelt. Im Umwälztrog 22 wird das vergleichmäßigte Altpapier in wässriger Suspension praktisch gewaschen, um es weitgehend von lösbaren Kontaminierungen und von weiterem feinteiligen Schwerschmutz zu befreien. Zu diesem Zweck ist die Vorrichtung 16 ferner an ihrer unteren Seite mit einer Schwerschmutzsammelkammer 28 versehen, aus der der Schwerschmutz von Zeit zu Zeit in den Deponiebehälter 10 ausgeschleust wird.

Das kontaminierte Suspensionswasser wird im vorliegenden Ausführungsbeispiel erst an späterer Stelle im Verfahren bei der Stoffeindickung aus dem Prozeß abgezogen und unmittelbar einer biologischen Klärstufe zugeführt. Es könnte jedoch auch bereits Spülwasser über die Schwerschmutzsammelkamme 28 der Vorrichtung 16 abgezogen werden. Dies hängt davon ab, mit welchen Stoffdichten in dem Umwälztrog 22 gearbeitet wird.

Das Rührwerk 24 im Umwälztrog 22 kann auch bereits für eine gewisse Vordisintegration des Stoffes eingesetzt werden, in welchem Fall es sich jedoch anbietet, im Trog 22 mit erhöhten Stoffdichten zu arbeiten. In diesem Fall ist es kaum möglich, Waschwasser über die Schwerschmutzsammelkammer 28 abzuziehen. Es wird über die Schwerschmutzsammelkammer vielmehr zusätzlich Verdünnungswasser für den Stoff zugegeben, welches an dieser Stelle gleich den Effekt hat, die Schwerschmutzsammelkammer 28 als einen Zyklonabscheider zu betreiben.

Aus dem Umwälztrog 22 gelangt der eventuell vordisintegrierte Stoff in ein im Austrittsschacht 26 der Vorrichtung 16 angeordnetes zweites Zerkleinerungsaggregat 30. Hier wird die Altpapiersuspension in kleine Stücke in der Größenordnung von etwa 8-12 mm zerkleinert und dabei gleichzeitig weiterdisintegriert, wobei die disintegrierende Wirkung neben der Aufteilung von Faserstoffbestandteilen in ihre Einzelfasern auch darin besteht, bei Stücken von kunststoffbeschichteten Papieren das Kunststoffolienstückchen vom Fasersubstrat abzulösen. Der so behandelte Stoff gelangt in eine Rührbütte 32, in der die Disintegration durch die Wirkung des Rührwerkes noch fortschreiten kann.

Über eine Pumpe 34 wird die dispergierte Altpapiersuspension einer ersten Sortiereinrichtung 36 Zugeführt. Als Sortierer kann beispielsweise ein Siebcontaminex CMV mit Schwerschmutzabgang der Firma Voith in Heidenheim eingesetzt werden. Die Sieblochweite dieses Gerätes kann 3 mm betragen, kann aber den jeweiligen Anforderungen angepaßt werden. In der Sortiereinrichtung 36 wird die Stoffsuspension in eine erste Faserstoffsuspension aufgeteilt, die in eine erste Faserstoffbütte 38 gelangt, und in eine zweite Fraktion, die außer weiterem Faserstoff den wesentlichen Anteil der nicht-disintegrierbaren Reststoffe enthält. In der ersten Sortiereinrichtung 36 wird gleichzeitig über eine Schwerschmutzschleuse 40 weiterer Schwerschmutz, wie Sand und dergl. aus dem System abgeführt.

Die die Reststoffe enthaltende zweite Fraktion aus der ersten Sortiereinrichtung 36 wird dann einer zweiten Sortiereinrichtung 42 zugeleitet, die ggf. einen weiteren, disintegrierenden Effekt auf diese Fraktion ausübt und sie schließlich in eine zweite Faserstofffraktion aufteilt, welche in eine zweite Faserstoffbütte 44 gelangt, und in eine Reststofffraktion, welche in eine Reststoffbütte 46 geleitet wird. Als zweite Sortiereinrichtung kann beispielsweise ein Turbowasher TW-Gr. 10 der Firma Voith in Heidenheim verwendet werden, mit beispielsweise einer Sieblochung von 2,6 mm.

Der in der Reststoffbütte 46 gesammelte Reststoff, der zu hohem Anteil aus Thermoplastmaterialien besteht, wird vorzugsweise einer an anderer Stelle beschriebenen Reststoffaufarbeitungsanlage zugeführt, in der im wesentlichen das Thermoplastmaterial aus dem Reststoff zurückgewonnen wird.

Die erste Faserstofffraktion aus der ersten Faserstoffbütte 38, die die größere aber auch kurzfaserigere der beiden Faserstofffraktionen ist, gelangt aus der Bütte 38 in einen Vertikalsortierer 48, in dem sie von restlichem kleinen Leichtschmutz befreit wird, der dem Reststoff in der Reststoffbütte 46 zugegeben wird. Die gereinigte erste Faserstofffraktion gelangt dann in eine Verdünnungsbütte 50, in der sie über einen Wasseranschluß 52 soweit verdünnt wird, daß sie in einer Waschflotationseinrichtung 54 weiterbehandelt werden kann. Solche Einrichtungen sind dem Fachmann bekannt. Da die erste Faserstofffraktion den überwiegenden Teil an in Dispersion gebrachten, abgelösten Druckfarben und dergl. enthält, werden diese Bestandteile zur Aufhellung des Stoffes in der Waschflotationseinrichtung 54 durch Flotation abgeschieden. Die in einem Eindicker 56 eingedickten, abgeschiedenen Schwerstoffe gelangen in den Deponiecontainer 10, während der flotationsgereinigte Faserstoff in einem Eindicker 58 wieder auf übliche Büttenstoffdichte gebracht und in einer ersten Fertigstoffbütte 60 zwischengelagert wird, von wo aus er dem Papiermaschinenbereich zugeführt werden kann. Das Filtrat aus dem Eindicker 58 gelangt in einen Filtratsammelbehälter 62, von wo es, insoweit es nicht in den Vorstufen zur Verdünnung wiederverwendet wird, einer biologischen Klärstufe zugeleitet wird.

Die zweite Faserstofffraktion aus der zweiten Faserstoffbütte 44, die den geringeren aber längerfaserigen Anteil der Faserstofffraktionen darstellt, wird auch über einen Vertikalsortierer 64 geleitet, dessen Spuckstoff ebenfalls in die Reststoffbütte 46 gelangt. Der Gutstoff wird in einem Eindicker 66 eingedickt und in eine Zwischenbütte 68 gefördert, während das Filtrat aus dem Eindicker 66 ebenfalls in den Filtratsammelbehälter 62 gelangt. Der eingedickte Langfaserstoff aus der Zwischenbütte 68 wird dann in einem Mahlaggregat 70, welches ein mit Steinzeug garnierter Doppelscheibenrefiner ist, auf bekannte Weise zur Festigkeitssteigerung möglichst fibrillierend gemahlen und dann einer Zweiten Fertigstoffbütte 72 zugeführt, aus der der Langfaserstoff ebenfalls zur Weiterverarbeitung im Papiermaschinenbereich zur Verfügung steht.

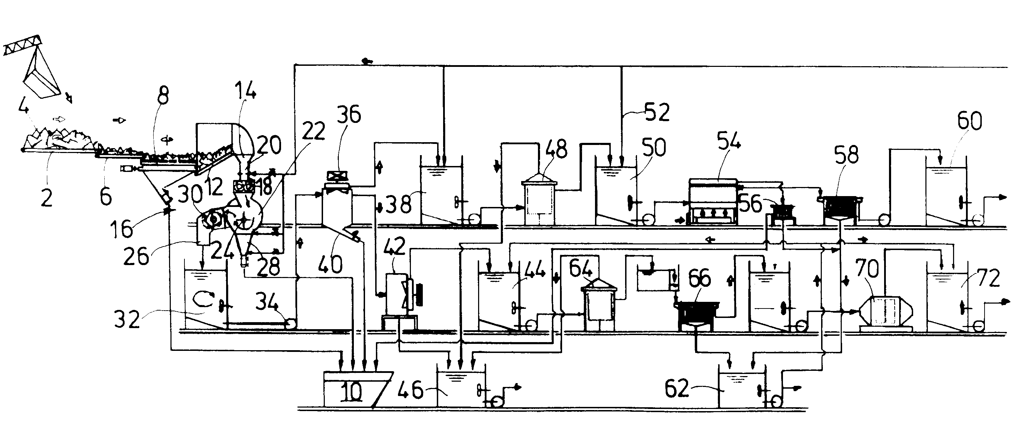

**Patentansprüche**

1. Verfahren zum Aufbereiten von Altpapier mit einem Anteil an schwer oder nicht disintegrierbaren Reststoffen, gekennzeichnet durch folgende Verfahrensschritte:
   a) Zerkleinern des Altpapiers in vergleichmäßigte Flächenschnitte, die in wässriger Suspension förderbar sind,
   b) weiteres Zerkleinern der vergleichmäßigten Flächenabschnitte in kleine Flächenstücke,
   c) Zerfasern der kleinen Flächenstücke in der wässrigen Suspension und
   d) Auftrennen der Suspension in eine im wesentlichen Faserstoff enthaltende Fraktion (erste Faserstoff-Fraktion) und eine den wesentlichen Anteil an nicht disintegrierbaren Reststoffen enthaltende Fraktion.

2. Verfahren nach Anspruch 1, dadurch gekennzeichnet, daß zwischen Verfahrensschritt a) und b) eine Wäsche des Stoffes in wässriger Suspension mit erforderlichenfalls verbundener Schwerschmutzabscheidung erfolgt.

3. Verfahren nach Anspruch 1 oder 2, dadurch gekennzeichnet, daß die Verfahrensschritte b) und c) gleichzeitig erfolgen.

4. Verfahren nach mindestens einem der Ansprüche 1 bis 3, dadurch gekennzeichnet, daß die Vorzerkleinerung des Rohmaterials nach Verfahrensschritt a) zu Flächenabschnitten mit einem größten Durchmesser von 30 bis 100 mm erfolgt.

5. Verfahren nach mindestens einem der Ansprüche 1 bis 4, dadurch gekennzeichnet, daß die weitere Zerkleinerung des Rohmaterials zu kleinen Flächenstücken nach Verfahrensschritt b) zu Flächenstücken mit einem größten Durchmesser von 2 bis 15 mm, vorzugsweise von 6 bis 12 mm erfolgt.

6. Verfahren nach Anspruch 5, dadurch gekennzeichnet, daß am Ausgang der Feinzerkleinerungsstufe ein Sieb verwendet wird, welches die Größe der durchgehenden kleinen Flächenstücke im wesentlichen begrenzt.

7. Verfahren nach mindestens einem der Ansprüche 3 bis 6, dadurch gekennzeichnet, daß zur Durchführung der Verfahrensschritte a), b), und c) nach Anspruch 1 sowie der Verfahrensschritte nach Anspruch 2 eine diese Schritte ausführende, kombinierte Vorrichtung verwendet wird.

8. Verfahren nach mindestens einem der Ansprüche 1 bis 7, dadurch gekennzeichnet, daß die Stoffsuspension zwischen den Verfahrensschritten c) und d) zur weiteren Zerfaserung in einer Rührbütte zwischengelagert wird.

9. Verfahren nach mindestens einem der Ansprüche 1 bis 8, dadurch gekennzeichnet, daß die im wesentlichen Faserstoffe enthaltende Fraktion (erste Faserstoff-Fraktion) einer Nachsortierung unterworfen wird und der Spuckstoff aus dieser Nachsortierung der die Reststoffe enthaltenden Fraktion zugegeben wird.

10. Verfahren nach mindestens einem der Ansprüche 1 bis 9, dadurch gekennzeichnet, daß bei der Auftrennung der Suspension in die im wesentlichen Faserstoff enthaltende Fraktion (erste Faserstoff-Fraktion) und die den wesentlichen Anteil der Reststoffe enthaltende Fraktion eine Schwerschmutzabscheidung vorgenommen wird.

**11.** Verfahren nach mindestens einem der Ansprüche 1 bis 10, dadurch gekennzeichnet, daß das noch trockene Altpapier vor Verfahrensschritt a) einer Fremdkörperausscheidung, insbesondere durch ein Schüttelsieb unterworfen wird.

**12.** Verfahren nach mindestens einem der Ansprüche 1 bis 11, dadurch gekennzeichnet, daß die den wesentlichen Anteil der Reststoffe enthaltende Fraktion einer Nachzerfaserung unterworfen und in einer weiteren Trennstufe in eine im wesentlichen aus den Reststoffen bestehende Fraktion (Reststoff-Fraction) und in eine zweite Faserstoff-Fraktion aufgeteilt wird.

**13.** Verfahren nach Anspruch 12, dadurch gekennzeichnet, daß die zweite Faserstoff-Fraktion einer Mahlung unterworfen wird.

**14.** Verfahren nach Anspruch 13, dadurch gekennzeichnet, daß ein Mahlaggregat mit Steinzeuggarnierung verwendet wird.

**15.** Verfahren nach Anspruch 13 oder 14, dadurch gekennzeichnet, daß die Mahlung nach erforderlichenfalls vorheriger Eindickung des Faserstoffes bei Stoffdichten zwischen 4 und 15% atro, vorzugsweise bei Stoffdichten von über 10% atro erfolgt.

**16.** Verfahren nach mindestens einem der Ansprüche 9 bis 15, dadurch gekennzeichnet, daß die erste Faserstoff-Fraktion einer Waschflotation unterworfen wird.

**17.** Verfahren nach Anspruch 12 dadurch gekennzeichnet, daß die im wesentlichen aus den Reststoffen bestehende Fraktion (Reststoff-Fraktion) einer Nachwäsche unterworfen und ausgewaschene Faserstoffe einer der Faserstoff-Fraktionen zugegeben werden.

**18.** Verfahren nach einem der Ansprüche 12 bis 17, dadurch gekennzeichnet, daß aus der Reststoff-Fraktion in einer Sortierstufe Anteile ausgeschieden werden, die spezifisch schwerer als Thermoplaste sind.

**19.** Verfahren nach Anspruch 18, dadurch gekennzeichnet, daß die Abtrennung der spezifisch schweren Teile mittels Zykloneinrichtungen erfolgt.

**20.** Verfahren nach mindestens einem der Ansprüche 12 bis 19, dadurch gekennzeichnet, daß die Reststoff-Fraktion entwässert und getrocknet wird.

**21.** Verfahren nach Anspruch 20, dadurch gekennzeichnet, daß die Reststoff-Fraktion granuliert wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | AT-A-378 792 (FERROMETALL EISEN- UND SCHROTTHANDELSGESELLSCHAFT M.B.H.) * das ganze Dokument * | 1,3,6,8 | D21B1/32 D21B1/02 |
| A | | 17,19-21 | |
| | --- | | |
| A | DE-B-1 218 869 (CONDUX-WERK, H.A. MERGES K.G.) * das ganze Dokument * | 1,3,6 | |
| | --- | | |
| A | DE-B-1 008 562 (H. BORRMANN ET AL.) * das ganze Dokument * | 1,3, 19-21 | |
| | ----- | | |

**RECHERCHIERTE SACHGEBIETE (Int. Cl.5)**

D21B
D21C

Der vorliegende Recherchenbericht wurde für alle Patentansprüche erstellt

| Recherchenort | Abschlußdatum der Recherche | Prüfer |
|---|---|---|
| DEN HAAG | 27 MAERZ 1992 | HAEUSLER F.U. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument